# EUROPEAN PATENT SPECIFICATION

(11) **EP 0 399 805 B1**
(45) Date of publication and mention of the grant of the patent: **21.08.1996**
(21) Application number: 90305616.6
(22) Date of filing: 23.05.1990
(51) Int. Cl.: C08K 5/3435, C08L 27/06

(54) **Polyvinyl chloride resin composition**
Polyvinylchloridharzzusammensetzung
Composition de résine de chlorure de polyvinyle

(30) Priority: 23.05.1989 JP 130360/89
(43) Date of publication of application: 28.11.1990
(73) Proprietor: SUMITOMO CHEMICAL COMPANY, LIMITED, Osaka (JP)
(72) Inventor: Igarashi, Toshio, Kyoto-shi, Kyoto-fu (JP); Wakatsuki, Akira, Ibaraki-shi, Osaka-fu (JP); Shida, Yuu, Takatsuki-shi, Osaka-fu (JP)
(74) Representative: Geering, Keith Edwin

(56) References cited:
- EP-A- 0 073 386
- EP-A- 0 237 485
- EP-A- 0 290 386
- DATABASE CHEMICAL ABSTRACTS, (HOST: STN), 1985, no. 103 (20): 161339c, Columbus, Ohio, US; & JP-A-60094439 (ADEKA ARGUS CHEMIKAL K.K.) 27.05.1985

## Description

The present invention relates to a polyvinyl chloride resin composition for molding articles for automobile use, etc.

Recently, there has been a positive demand for interior covering materials of automobiles including crash pads, armrests, headrests, console boxes, meter hoods or door trims, to be of light weight and luxurious soft feel, and to have embossed and stitched patterns of sophisticated quality.

Hitherto, these covering materials have been vacuum-formed products of plasticized sheet composed mainly of polyvinyl chloride resin and ABS resin, or rotational-molded or slush-molded products of plastisol compound composed mainly of polyvinyl chloride resin and plasticizer (hereinafter referred to as sol molded product).

Although the vacuum-formed product meets the object in terms of reduction in weight, it does not have a soft feel but is stiff to the touch.
Further, it is difficult to fabricate into products of complicated shape having embossed or stitched patterns giving a sense of high surface quality.

Further, the vacuum-formed product has the drawback that, because of its large residual strain on forming, cracks are easily formed over long term use.

On the other hand, although the sol molded product has a feeling of softness, the sol, because of its low gelation temperature, rapidly melts in the mold, and phenomena such as flow mark, lip, stringiness of sol, etc. occur.

For this reason, the sol molded product has the drawbacks that its inside surface lacks smoothness, discharge of the sol from the mold takes too long, and the covering material is too thick.

The sol also has the problems that a great deal of labor is required to clean tanks, pipes, etc. on change of color, and that the viscosity changes with time so that the sol cannot stand long-term storage.

In recent years, a powder molding method has attracted attention to solve these drawbacks and problems.

Generally, the powder molding methods include fluidized bed coating, electrostatic coating, powder flame spray coating, powder rotational molding, powder slush molding techniques and the like. Particularly, the powder rotational molding and powder slush molding techniques are suitable for producing covering materials for automobile interior parts.

This powder rotational molding or powder slush molding is a method in which, by rotating or shaking an assembled unit of a mold(kept at a temperature of 180°C or higher)and a resin powder supply box, or jetting the resin powder into the mold, the resin powder is fusion-adhered to the inner surface of the mold, and the residual unfused powder is recovered automatically or forcedly into the box (Japanese Patent Kokai No. 132507/83).

Methods to heat the mold in such powder molding include using a gas furnace, circulating an oil heat medium, dipping into heated oil or heated flowing sand, high-frequency induction heating, etc. (Technical Publication, 1985-I, pages 84-91, of Sumitomo Chemical Company, Limited).

It is well known to produce a powdery composition by dry-blending a polyvinyl chloride resin with a plasticizer, stabilizer, pigment, etc. on a blender or high-speed rotating mixer equipped with a heating jacket.

The powdery resin composition to be used for the powder molding process mentioned above must be provided with satisfactory flowability and moldability. In particular, reflecting greater dimension and sophisticated quality of modern automobiles, shapes of crash pad, meter hood, etc. have become larger and more complex, and as a result, further improvement of flowability and moldability of powdery resinous composition is keenly required.

In order to improve the flowability and moldability, it is also well known to add a finely powdered polyvinyl chloride resin and an inorganic filler such as finely powdered calcium carbonate, silica, etc. at the cooling step after completion of the dry-blending (Rubber Digest, Vol. 14, No. 8, pp. 32-40; Polyvinyl Chloride - Its Chemistry and Industry II, pp. 367-370, 1968; and Japanese Patent Publication No. 1575/1962).

Automobile interior parts made from the resin compositions are frequently used in combination with polyurethanes, so that it becomes necessary to prevent the interior parts from discoloration caused by amine from the polyurethane. Consequently, there has beena demand for

polyvinyl chloride resin powder molding compositions having amine resistance. In this connection there have been proposed various methods such as those disclosed in Japanese Patent Kokai Nos. 161451/85, 91238/86, 270645/87 and 65157/89.

Reflecting recent growth of highly sophisticated automobiles, the change of design and expanded area of the windscreen for minimizing air resistance, with the angle of the windscreen becoming closer to parallel with the crash pad and meter hood, means that the surface temperature of the latter items can he higher than heretofore;there is thus requirement for thermal resistivity, resistivity to light and, in particular, resistance against change in surface gloss or luster of these interior component materials.

A variety of methods have been proposed for improving resistivity against light ("Polyvinyl chloride, basis and application", 1988, published by Soft Giken, pages 310-325). These methods are to improve the discoloration property under exposure to light. Nevertheless, none of them has ever solved those problems mentioned above.

Luster or gloss generated by radiated light can be suppressed, and at the same time, discoloration can be lessened by adding hindered amine stabilizer (hereinafter sometimes referred to as HALS) to vinyl chloride resin (JP-A-60 094 439, EP 237 485). However, the addition of this stabilizer HALS generally causes coloration to occur on exposure to heat and the thermal resistivity is lowered. Furthermore, lamination of an article made from this composition to polyurethane resin foam would promote coloration.

The cause of such behavior of polyvinyl chloride resin composition under high temperature is not yet exactly known. However, it is probable that generation of salt formed as a result of reaction between hydrogen chloride generated from thermally affected polyvinyl chloride resin and HALS accounts for such behavior mentioned above.

The present invention has been accomplished as a result of our research work on light-and-heat stabilizers for concurrently preventing occurrence of luster and thermal discoloration from being accelerated on the surface of powder moulded interior covering materials of polyvinyl chloride resin composition on exposure to light, so that the requirement mentioned earlier can be satisfied.

The invention uses, as such an additive for powder moulding polyvinyl chloride compositions, hindered amine light stabiliser selected from
- (A): polycondensate of dimethyl succinate and 1-(2-hydroxyethyl)-4-hydroxy-2,2,6,6-tetramethylpiperidine,
- (F): 1-[2-[3-(3,5-di-t-butyl-4-hydroxyphenyl)propionyloxy]-ethyl]-4-[3-(3,5-di-t-butyl-4-hydroxyphenyl)-propionyloxy]-2,2,6,6-tetramethylpiperidine, and
- (G): 8-acetyl-3-dodecyl-7,7,9,9-tetramethyl-1,3,8-triazaspiro [4,5] decane 2,4-dion
the amount of said additive being at least 0.01 (preferably 0.01 to 5) parts by weight per 100 parts by weight of polyvinyl chloride. The hindered amine stabilizer used according to the invention preferably has a melting point or softening point of 120°C or lower.

Among conventionally available HALS, there are those wherein the N-substituent is a terminal hydrogen or methyl group. Although these conventional HALS are effective in the improvement of resistance against light, it has been found that none of them Is sufficiently effective to prevent thermal coloration.

When softness is demanded of the articles powder molded from the polyvinyl chloride resin composition of this invention, plasticizer can be included, e.g. at 10 to 120, preferably 50 to 80, parts by weight per 100 parts by weight of the vinyl chloride resin. In preparing the composition by dry blending it is necessary that the temperature of the composition be controlled in a range from 110°C to 130°C. If the temperature is above 130°C, mutual fusion of pulverized particles occurs, as a result of which coarse particles are formed, resulting in poor productivity. In order to allow HALS to work properly and prevent adverse effects, it is most preferable to use HALS having a melting point or softening point of 120°C or less to cause sufficient absorption of HALS into the vinyl chloride resin.

If HALS having a melting point (or softening point) above 120°C is used it may be insufficiently absorbed by the vinyl chloride resin, resulting in surface adhesion. If this occurs, the stabilizer remains on the surface even after shaping into final articles. This would give satisfactory resistivity against light. However, since the surface is thermally affected while the molding or heat-resistance test is conducted, the surface adhered stabilizer would easily react with hydrogen chloride generated from the vinyl chloride resin, thus promoting discoloration.

In this invention the specified amounts to at least 0.01 (e.g. 0.01 to 5) parts by weight, desirably 0.05 to 3 parts by weight, more desirably 0.1-1 part by weight, based on 100 parts by weight of vinyl chloride resin. If less than 0.01 part by weight of HALS is used, an adequate effect cannot be obtained. This in turn would cause luster to occur when exposed to light. If more than 5 parts by weight is added, a correspondingly increased effect is not obtained - there is merely wasted expense, and indeed the thermal resistance and fastness to discoloration may be slightly lowered.

The vinyl chloride resins for use in the present invention include those which are produced by suspension polymerization, bulk polymerization or emulsion polymerization, and for example there may be mentioned vinyl chloride homopolymers , copolymers of vinyl chloride with a compound copolymerizable therewith such as ethylene, propylene, vinyl acetate, alkyl acrylate, alkyl methacrylate, etc., graft copolymers of an ethylene/vinyl acetate copolymer with vinyl chloride, and mixtures of two or more of these. However, the polyvinyl chloride resin to be used in the present invention is not limited to these particular resins.

The plasticizers for use in the present invention include phthalic esters such as di-2-ethylhexyl phthalate, diisodecyl phthalate, diisoundecyl phthalate, di(C₉-C₁₁)alkyl phthalates, etc., and trimellitic esters such as trioctyl trimellitate, tri-2-ethylhexyl trimellitate, tridecyl trimellitate, tri(C₇-C₉ or C₇-C₁₁)alkyl trimellitates, etc., and pyromellitates such as tetra-2-ethylhexyl pyromellitate, tetraoctyl pyromellitate, tetraalkyl-(C₇-C₉)pyromellitate, etc.

Although the amount of plasticizer to be blended is not critical it is generally used in an amount of 10-120 parts by weight, preferably 50-80 parts by weight, per 100 parts by weight of the polyvinyl chloride resin.

Further, it is also possible for the composition of this invention to contain a small amount of epoxy plasticizer, polyester plasticizer, etc. The plasticizers to be used in the present invention are not limited to those listed above.

If desired, the polyvinyl chloride resin composition may further contain a stabilizer.

The stabilizers for use in this invention include compounds of zinc, barium, sodium, potassium, calcium, lithium, tin, etc, e.g. carboxylic acid salts of these metals, among which mixtures of zinc salt and barium salt are preferable.

It is also possible to use, in addition to the above stabilizers, such other stabilizers as magnesium oxide, magnesium hydroxide, hydrotalcite compounds, zinc oxide, barium oxide, calcium oxide, barium phosphate, etc.

Particularly, the combined use of a mixed salt of zinc and barium with hydrotalcite compound is preferable as it improves the heat resistance when a polyurethane is adhered or laminated.

Further it is also possible to use phenolic and thioether antioxidants, phosphites, diketo compounds, ultraviolet absorbers such as salicylic acid esters, benzophenone compounds and benzotriazole compounds, epoxy compounds such as epoxidized soybean oil, and those synthesized from bisphenol A and epichlorohydrin.

The powdery polyvinyl chloride resin of this invention may be blended with, in addition to the plasticizer and stabilizer, pigment, filler, foaming agent and other auxiliary agents in accordance with necessity.

The expression "100 parts by weight of polyvinyl chloride" or the like means the total of the amount of the vinyl chloride resin before the dry blending plus the amount of any fine particles of polyvinyl chloride resin added after the dry blending.

The present invention is more concretely illustrated by following Examples and Comparative Examples, but it should be understood that the scope of the invention is not limited to these particular Examples.

### 1. Hindered amine light stabilizer (HALS)

The names, structural formulae, molecular weights and melting points (or softening points) of hindered amine light stabilizers used in the Examples of the invention and Comparative Examples are indicated below.
- (A): Polycondensate of dimethyl succinate and 1-(2-hydroxyethyl)-4-hydroxy-2,2,6,6-tetramethylpiperidine (TINUVIN® 622LD, product of Ciba Geigy, S.A.) 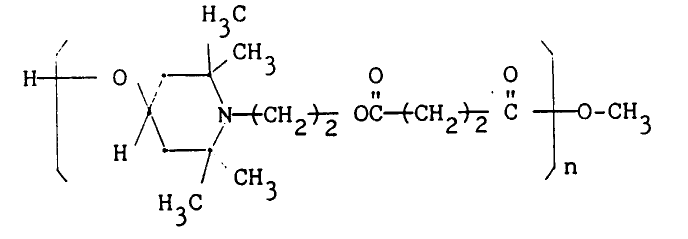
Molecular weight: 3,000 or higher
Softening point : 55 through 70°C
- (B): Bis(2,2,6,6-tetramethyl-4-piperidyl)sebacate (SANOL® LS-770, product of Sankyo Co., Ltd.) 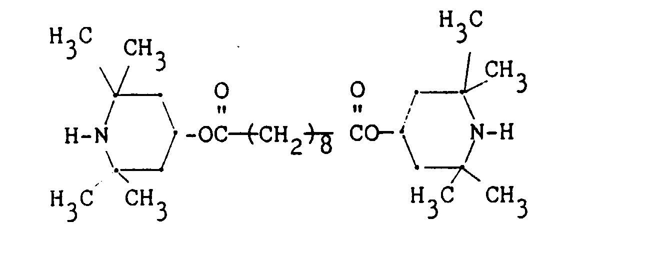
Molecular weight: 481
Melting point : 81-86°C
- (C): Poly[[6-(1,1,3,3-tetramethylbutyl)imino-1,3,5-triazine-2,4-diyl][(2,2,6,6-tetramethyl-4-piperidyl)imino]]hexamethylene[(2,2,6,6-tetramethyl-4-piperidyl)imino]] (CHIMASSORB^{R} 944LD, product of Ciba Geigy, S.A.) 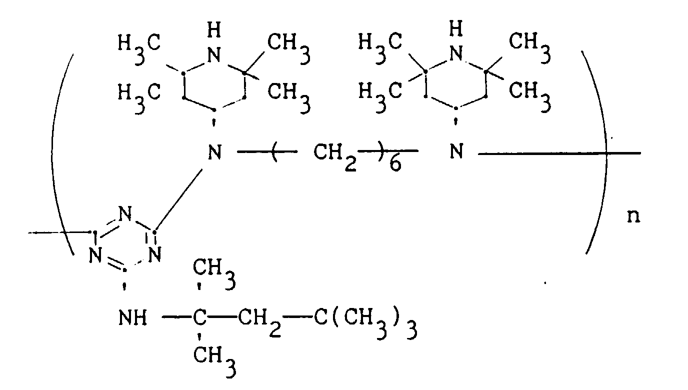
Molecular weight: 2,500 or higher
Softening point : 100-135°C
- (D): 1,2,2,6,6-pentamethyl-4-piperidyl/tridecyl(mixed)-1,2, 3,4-butantetracarboxylate (Mark LA-62, product of Adeka-Argus) each of 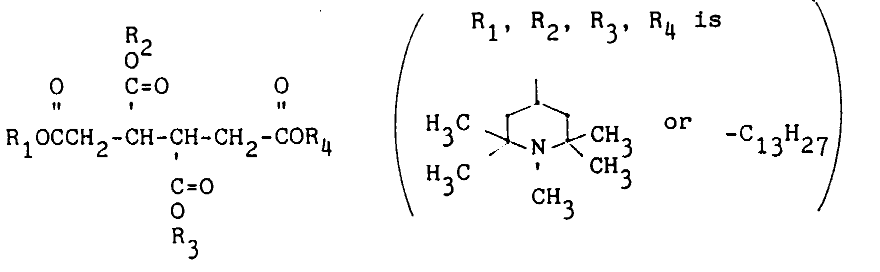
Molecular weight: about 900
Liquid compound
- (E): 2-2-(3,5-di-t-butyl-4-hydroxybenzyl)-2-n-butyl )-2-n-butyl malonic acid bis(1,2,2,6,6-pentamethyl-4-piperidyl) (TINUVIN® 144, product of Ciba Geigy, S.A.) 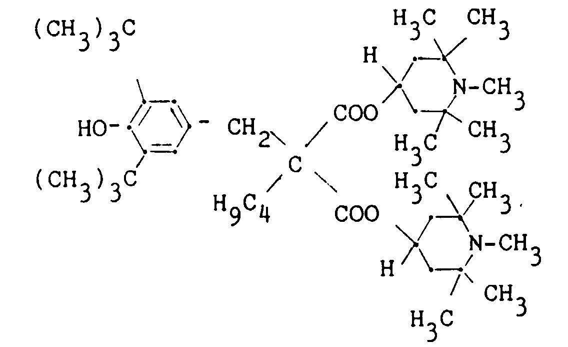
Molecular weight: 685
Melting point : 146-150°C
- (F): 1,[2-[3-(3,5-di-t-butyl-4-hydroxyphenyl)propionyloxy] ethyl]-4-[3-(3,5-di-t-butyl-4-hydroxyphenyl)propionyl oxy]-2,2,6,6-tetramethylpiperidine (SANOL® LS-2626, product of Sankyo Co., Ltd.) 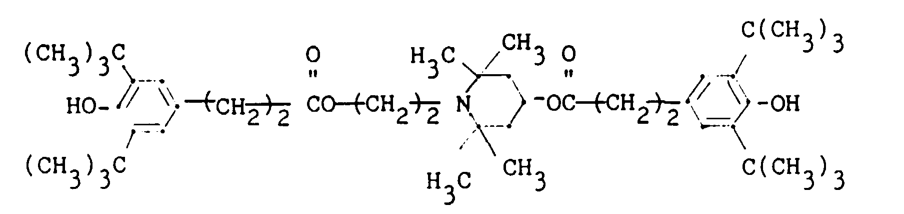
Molecular weight: 722
Melting point : 135-140°C
- (G): 8-acetyl-3-dodecyl-7,7,9,9-tetramethyl-1,3,8-triazaspyro[4,5]decane-2,4-dion (SANOL® LS-440, product of Sankyo Co., Ltd.) 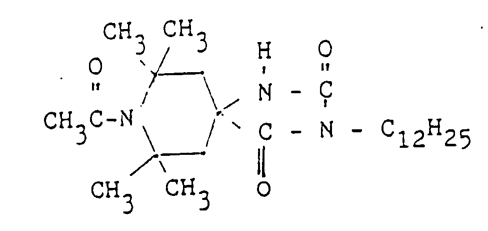
Molecular weight: 436
Melting point : 75-77°C

### 2. Preparation of resinous composition for powder molding

| (Composition) | |
|---|---|
| Polyvinyl chloride resin | 90 parts by weight |
| (polymerization degree: 800) | |
| [SUMILIT® Sx-8G, product of Sumitomo Chem. Co., Ltd.] | |
| Fine particles of polyvinyl chloride resin | 10 parts by weight |
| (polymerization degree: 1,300) | |
| [SUMILIT® Px-Q, product of Sumito Chem. Co., Ltd.] | |
| Plasticizer DIDP (diisodecylphthalate) | 70 parts by weight |
| Ba/Zn stabilizer | 3 parts by weight |
| Epoxidized soybean oil | 2 parts by weight |
| Pigment | Optimum amount |
| Light stabilizer (kinds and added amounts are shown in Table 1) | |

First, the polyvinyl chloride resin (SUMILIT® Sx-8G) obtained by the usual suspension polymerization was charged in a super mixer. Then, the mixer was stirred at a constant rotation speed while applying heat. When the temperature of the resin reached 80°C, there were added plasticizer, stabilizer, epoxidized soybean oil, pigment and light stabilizer, and dry-blending was conducted. When the temperature of the blend reached 120°C, the blend was cooled to a temperature below 50°C, and then fine particles of polyvinyl chloride resin (SUMILIT® Px-Q) were uniformly dispersed therein to obtain a resin composite for powder molding.

### 3. Production of powder-molded sheet and evaluation:

First, a nickel plane mold was heated to 230°C in a thermal furnace at 280°C. The powdery composition was poured and spread on the heated mold to cause fusion adhering to the mold for 10 seconds. Then unmolten powder was discharged, and the mold with adhered melted powder was heated again in the furnace at 280°C for a minute.

The molded product thus obtained was placed on a plate for urethane foaming and then had injected thereon a urethane material prepared from Polymeric MDI, polyol, etc. to eventually obtain a polyurethane-adhered sheet 10 mm thick.

### (1) Evaluation of thermal resistivity:

The polyurethane-adhered sheet obtained as above was Dlaced in a Gear-oven containing a heated atmosphere at 110°C, and then an aging test was performed every 100 hours to 400 hours and after 800 hours. Using the SM color computer model SM-4 (product of Suga Laboratory Equipment Co., Ltd.), the rate of discoloration ΔE was measured by referring to the reference sample sheet which was not subjected to the aging. The values ΔE thus obtained were classified as follows:

| | |
|---|---|
| ΔE = 0 - 0.5 | rating 5 (best) |
| 0.6 - 1.2 | 5 - 4 |
| 1.3 - 1.9 | 4 |
| 2.0 - 2.6 | 4 - 3 |
| 2.7 - 3.9 | 3 |
| 4.0 - 5.4 | 3 - 2 |
| 5.5 - 7.6 | 2 |
| 7.7 - 10.7 | 2-1 |
| >10.8 | 1 (worst) |

The results of the measurement are shown in Table 1.

### (2) Evaluation of light resistance:

The polyurethane-adhered sheet was placed in a U.V. fade-o-meter with black panels at 83°C, and an aging test was conducted every 100 hours to 400 hours and after 800 hours. In the same way as for the evaluation of thermal resistivity ΔE was measured and rating was determined. Using digital variable-angle gloss meter model UGV-5K (product of Suga Laboratory Equipment Co., Ltd.) and by respectively setting the light incident angle and light-reception angle at 60°C, gloss or luster was determined. The lower the surface gloss rating, the lower the gloss or luster (i.e. the more preferable). The results are also shown in Table 1.

**Table 1**

| | Examples | | | | Comparative examples | | | | |
|---|---|---|---|---|---|---|---|---|---|
| | 1 | 2 | 3 | 4 | 1 | 2 | 3 | 4 | 5 |
| Kinds (reference code) of light stabilizer | A | A | F | G | - | B | C | D | E |
| Added amount (party by weight) | 0.2 | 1.0 | 0.2 | 0.2 | - | 0.2 | 0.2 | 0.2 | 0.2 |

| Thermal discoloration rating | | | | | | | | | |
|---|---|---|---|---|---|---|---|---|---|
| 100 hours | 5 | 5 | 5 | 5 | 5 | 4 | 5-4 | 4 | 4 |
| 200 | 5-4 | 5-4 | 4 | 5-4 | 5-4 | 3 | 3 | 3 | 3 |
| 300 | 4 | 4 | 4-3 | 4 | 4 | 3 | 3 | 3 | 3 |
| 400 | 4 | 4-3 | 4-3 | 4 | 4 | 3 | 3 | 3 | 3 |
| 800 | 4-3 | 4-3 | 3 | 4-3 | 4-3 | 2-1 | 2 | 2-1 | 2-1 |

| Light-exposed discoloration rating | | | | | | | | | |
|---|---|---|---|---|---|---|---|---|---|
| 100 hours | 5 | 5 | 5 | 5 | 5-4 | 5-4 | 5 | 5 | 5 |
| 200 | 5-4 | 5-4 | 5-4 | 5-4 | 4 | 5-4 | 5 | 5 | 5-4 |
| 300 | 5-4 | 5-4 | 5-4 | 5-4 | 4-3 | 4 | 5-4 | 5-4 | 5-4 |
| 400 | 4 | 4 | 4 | 4 | 3 | 4-3 | 5-4 | 5-4 | 4 |
| 800 | 4 | 4 | 4 | 4 | 2 | 3 | 4 | 4 | 4 |

| Surface gloss rating | | | | | | | | | |
|---|---|---|---|---|---|---|---|---|---|
| 0 hour | 1.2 | 1.2 | 1.2 | 1.2 | 1.2 | 1.2 | 1.2 | 1.2 | 1.2 |
| 100 | 1.2 | 1.2 | 1.2 | 1.2 | 1.2 | 1.3 | 1.2 | 1.2 | 1.2 |
| 200 | 1.3 | 1.2 | 1.2 | 1.3 | 1.3 | 1.4 | 1.2 | 1.2 | 1.2 |
| 300 | 1.4 | 1.3 | 1.3 | 1.4 | 2.1 | 1.6 | 1.2 | 1.3 | 1.2 |
| 400 | 1.5 | 1.3 | 1.3 | 1.5 | 3.0 | 1.9 | 1.3 | 1.3 | 1.3 |
| 800 | 1.7 | 1.5 | 1.6 | 1.8 | 4.0 | 3.0 | 1.4 | 1.4 | 1.5 |

## Claims

1. A powder moulding method which uses as moulding powder a polyvinyl chloride composition containing, per 100 parts by weight of polyvinyl chloride, at least 0.01 parts by weight of additive selected from
(A) polycondensate of dimethyl succinate and 1-(2-hydroxyethyl)-4-hydroxy-2,2,6,6-tetramethylpiperidine,
(F) 1-[2-[3(3,5-di-t-butyl-4-hydroxyphenyl)propionyloxy]-ethyl]-4-[3-(3,5-di-t-butyl-4-hydroxyphenyl)-propionyloxy]-2,2,6,6-tetramethylpiperidine, and
(G) 8-acetyl-3-dodecyl-7,7,9,9-tetramethyl-1,3,8-triazaspiro[4,5]decane 2,4-dion.

2. A method according to claim 1, wherein the amount of said additive is (a) up to 5, or (b) 0.05 to 3 or (c) 0.1 to 1 parts by weight per 100 parts by weight of polyvinyl chloride.

3. The use of compound selected from
(A) polycondensate of dimethyl succinate and 1-(2-hydroxyethyl)-4-hydroxy-2,2,6,6-tetramethylpiperidine,
(F) 1-[2-[3-(3,5-di-t-butyl-4-hydroxyphenyl)propionyloxy]-ethyl]-4-[3-(3,5-di-t-butyl-4-hydroxyphenyl)-propionyloxy]-2,2,6,6-tetramethylpiperidine, and
(G) 8-acetyl-3-dodecyl-7,7,9,9-tetramethyl-1,3,8-triazaspiro[4,5]decane 2,4-dion
as additive in a polyvinyl chloride powder moulding composition to reduce the luster and thermal discoloration of powder moulded products thereof.

4. A use according to claim 3, wherein the amount of said additive is (a) up to 5, or (b) 0.05 to 3 or (c) 0.1 to 1 parts by weight per 100 parts by weight of polyvinyl chloride.

5. A method of making a powder for powder moulding which comprises dry blending polyvinyl chloride powder with additive selected from
(A) polycondensate of dimethyl succinate and 1-(2-hydroxyethyl)-4-hydroxy-2,2,6,6-tetramethylpiperidine,
(F) 1-[2-[3-(3,5-di-t-butyl-4-hydroxyphenyl)propionyloxy]-ethyl]-4-[3-(3,5-di-t-butyl-4-hydroxyphenyl)-propionyloxy]-2,2,6,6-tetramethylpiperidine, and
(G) 8-acetyl-3-dodecyl-7,7,9,9-tetramethyl-1,3,8-triazaspiro[4,5]decane 2,4-dion at 110 to 130°C and dispersing fine particles of polyvinyl
chloride in the resulting powder blend, the amount of said additive being at least 0.01 parts by weight per 100 parts by weight of total polyvinyl chloride.

6. A method according to claim 5, wherein the amount of said additive is (a) up to 5, or (b) 0.05 to 3 or (c) 0.1 to 1 parts by weight per 100 parts by weight of polyvinyl chloride.

7. A powder moulding powder which comprises powder particles of polyvinyl chloride incorporating additive selected from
(A) polycondensate of dimethyl succinate and 1-(2-hydroxyethyl)-4-hydroxy-2,2,6,6-tetramethylpiperidine,
(F) 1-[2-[3-(3,5-di-t-butyl-4-hydroxyphenyl)propionyloxy]-ethyl]-4-[3-(3,5-di-t-butyl-4-hydroxyphenyl)-propionyloxy]-2,2,6,6-tetramethylpiperidine, and
(G) 8-acetyl-3-dodecyl-7,7,9,9-tetramethyl-1,3,8-triazaspiro[4,5]decane 2,4-dion in admixture with further fine particles of polyvinyl
chloride, the amount of said additive being at least 0.01 parts by weight per 100 parts by weight of total polyvinyl chloride.

8. A powder according to claim 7, wherein the amount of said additive is (a) up to 5, or (b) 0.05 to 3 or (c) 0.1 to 1 parts by weight per 100 parts by weight of polyvinyl chloride.

## Patentansprüche

1. Ein Pulververformungsverfahren, das als Formpulver eine Polyvinylchloridzusammensetzung verwendet, die pro 100 Gewichtsteile Polyvinylchlorid wenigstens 0,01 Gewichtsteile Zusatz enthält, ausgewählt aus
(A) Polykondensat von Dimethylsuccinat und 1-(2-Hydroxyethyl)-4-hydroxy-2,2,6,6-tetramethylpiperidin,
(F) 1-[2-[3 (3,5-Di-t-butyl-4-hydroxyphenyl)-propionyloxy]-ethyl]-4-[3-(3,5-di-t-butyl-4-hydroxyphenyl)-propionyloxy]-2,2,6,6'-tetramethylpiperidin, und
(G) 8-Acetyl-3-dodecyl-7,7,9,9-tetramethyl-1,3,8-triazaspiro-[4,5]-decan-2,4-dion.

2. Verfahren nach Anspruch 1, dadurch gekennzeichnet, daß die Menge an diesem Zusatz (a) bis zu 5 oder (b) 0,05 bis 3 oder (c) 0,1 bis 1 Gewichtsteile pro 100 Gewichtsteile Polyvinylchlorid ist.

3. Verwendung einer Verbindung, ausgewählt aus
(A) Po!ykondensat von Dimethylsuccinat und 1-(2-Hydroxyethyl)-4-hydroxy-2,2,6,6-tetramethylpiperidin,
(F) 1 -[2-[3(3,5-Di-t-butyl-4-hydroxyphenyl)-propionyloxy]-ethyl]-4-[3-(3,5-di-t-butyl-4-hydroxyphenyl)-propionyloxy]-2,2,6,6-tetramethylpiperidin, und
(G) 8-Acetyl-3-dodecyl-7,7,9,9-tetramethyl-1,3,8-triazaspiro-[4,5]-decan-2,4-dion
als Zusatz in einer Polyvinylchloridpulverformmasse zur Verminderung des Glanzes und der thermischen Verfärbung der daraus pulvergeformten Produkte.

4. Verwendung nach Anspruch 3, dadurch gekennzeichnet, daß die Menge an diesem Zusatz (a) bis zu 5 oder (b) 0,05 bis 3 oder (c) 0,1 bis 1 Gewichtsteile pro 100 Gewichtsteile des Polyvinylchlorids ist.

5. Verfahren zur Herstellung eines Pulvers zur Pulververformung, dadurch gekennzeichnet, daß man trocken Polyvinylchloridpulvermit Zusätzen, die ausgewählt sind aus
(A) Polykondensat von Dimethylsuccinat und 1-(2-Hydroxyethyl)-4-hydroxy-2,2,6,6-tetramethylpiperidin,
(F) 1-[2-[3 (3,5-Di-t-butyl-4-hydroxyphenyl)-propionyloxy]-ethyl]-4-[3-(3,5-di-t-butyl-4-hydroxyphenyl)-propionyloxy]-2,2,6,6-tetramethylpiperidin, und
(G) 8-Acetyl-3-dodecyl-7,7,9,9-tetramethyl-1,3,8-triazaspiro-[4,5]-decan-2,4-dion
bei 110 bis 130 °C vermischt und feine Teilchen von Polyvinylchlorid in der erhaltenen Pulvermischung dispergiert, wobei die Menge an diesem Zusatz wenigstens 0,01 Gewichtsteile pro 100 Gewichtsteile des gesamten Polyvinylchlorids ist.

6. Verfahren nach Anspruch 6, dadurch gekennzeichnet, daß die Menge an diesem Zusatz (a) bis zu 5 oder (b) 0,05 bis 3 oder (c) 0,1 bis 1 Gewichtsteile pro 100 Gewichtsteile Polyvinylchlorid ist.

7. Pulverformpulver enthaltend Pulverteilchen von Polyvinylchlorid, die einen Zusatz enthalten, ausgewählt aus
(A) Polykondensat von Dimethylsuccinat und 1-(2-Hydroxyethyl)-4-hydroxy-2,2,6,6-tetramethylpiperidin,
(F) 1-[2-[3 (3,5-Di-t-butyl-4-hydroxyphenyl)-propionyloxy]-ethyl]-4-[3-(3,5-di-t-butyl-4-hydroxyphenyl)-propionyloxy]-2,2,6,6-tetramethylpiperidin, und
(G) 8-Acetyl-3-dodecyl-7,7,9,9-tetramethyl-1,3,8-triazaspiro-[4,5]-decan-2,4-dion.
in Mischung mit weiteren feinen Teilchen von Polyvinylchlorid, wobei die Menge an diesem Zusatz wenigstens 0,01 Gewichtsteile pro 100 Gewichtsteile an Gesamtpolyvinylchlorid beträgt.

8. Pulver nach Anspruch 7, dadurch gekennzeichnet, daß die Menge an diesem Zusatz (a) bis zu 5 oder (b) 0,05 bis 3 oder (c) 0,1 bis 1 Gewichtsteile pro 100 Gewichtsteile Polyvinylchlorid ist.

## Revendications

1. Procédé de moulage de poudre qui utilise comme poudre à mouler une composition de polychlorure de vinyle contenant, pour 100 parties en poids de polychlorure de vinyle, au moins 0,01 partie en poids d'un additif choisi entre
(A) un produit de polycondensation de succinate de diméthyle et de 1-(2-hydroxyéthyl)-4-hydroxy-2,2,6,6-tétraméthylpipéridine,
(F) la 1-[2-[3-(3,5-di-tertio-butyl-4-hydroxyphényl)propionyloxy]éthyl]-4-[3-(3,5-di-tertio-butyl-4-hydroxyphényl)propionyloxy]-2,2,6,6-tétraméthylpipéridine, et
(G) la 8-acétyl-3-dodécyl-7,7,9,9-tétraméthyl-1,3,8-triazaspiro[4,5]décane-2,4-dione.

2. Procédé suivant la revendication 1, dans lequel la quantité de l'additif en question s'élève (a) jusqu'à 5 ou (b) de 0,05 à 3 ou (c) de 0,1 à 1 parties en poids pour 100 parties en poids de polychlorure de vinyle.

3. Utilisation d'un composé choisi entre
(A) un produit de polycondensation du succinate de diméthyle et de la 1-(2-hydroxyéthyl)-4-hydroxy-2,2,6,6-tétraméthylpipéridine,
(F) la 1-[2-[3-(3,5-di-tertio-butyl-4-hydroxyphényl)propionyloxy]éthyl]-4-[3-(3,5-di-tertio-butyl-4-hydroxyphényl)propionyloxy]-2,2,6,6-tétraméthylpipéridine, et
(G) la 8-acétyl-3-dodécyl-7,7,9,9-tétraméthyl-1,3,8-triazaspiro[4,5]décane-2,4-dione,
comme additif dans une composition de moulage de poudre de polychlorure de vinyle pour réduire le lustre et le ternissement thermique de produits de moulage de cette composition en poids.

4. Utilisation suivant la revendication 3, dans laquelle la quantité de l'additif en question va (a) jusqu'à 5 ou (b) de 0,05 à 3 ou (c) de 0,1 à 1 parties en poids pour 100 parties en poids de polychlorure de vinyle.

5. Procédé de production d'une poudre destinée au moulage de poudre, qui comprend le mélange à sec de polychlorure de vinyle en poudre avec un additif choisi entre
(A) un produit de polycondensation de succinate de diméthyle et de 1-(2-hydroxyéthyl)-4-hydroxy-2,2,6,6-tétraméthylpipéridine,
(F) la 1-[2-[3-(3,5-di-tertio-butyl-4-hydroxyphényl)propionyloxy]éthyl]-4-[3-(3,5-di-tertio-butyl-4-hydroxyphényl)propionyloxy]-2,2,6,6-tétraméthylpipéridine, et
(G) la 8-acétyl-3-dodécyl-7,7,9,9-tétraméthyl-1,3,8-triazaspiro[4,5]décane-2,4-dione
à 110-130°C et la dispersion de fines particules de polychlorure de vinyle dans le mélange en poudre résultant, la quantité de l'additif en question étant d'au moins 0,01 partie en poids pour 100 parties en poids du polychlorure de vinyle total.

6. Procédé suivant la revendication 5, dans lequel la quantité de l'additif en question va (a) jusqu'à 5 ou (b) de 0,05 à 3 ou (c) de 0,1 à 1 parties en poids pour 100 parties en poids de polychlorure de vinyle.

7. Poudre pour moulage de poudre, qui comprend des particules de poudre de polychlorure de vinyle renfermant un additif choisi entre
(A) un produit de polycondensation de succinate de diméthyle et de 1-(2-hydroxyéthyl)-4-hydroxy-2,2,6,6-tétraméthylpipéridine,
(F) la 1-[2-[3-(3,5-di-tertio-butyl-4-hydroxyphényl)propionyloxy]éthyl]-4-[3-(3,5-di-tertio-butyl-4-hydroxyphényl)propionyloxy]-2,2,6,6-tétraméthylpipéridine, et
(G) la 8-acétyl-3-dodécyl-7,7,9,9-tétraméthyl-1,3,8-triazaspiro[4,5]décane-2,4-dione
en mélange avec d'autres fines particules de polychlorure de vinyle, la quantité de l'additif en question étant d'au moins 0,01 partie en poids pour 100 parties en poids de polychlorure de vinyle total.

8. Poudre suivant la revendication 7, dans laquelle la quantité de l'additif en question va (a) jusqu'à 5 ou (b) de 0,05 à 3 ou (c) de 0,1 à 1 parties en poids pour 100 parties en poids de polychlorure de vinyle.
